**Europäisches Patentamt**

**European Patent Office**

**Office européen des brevets**

(19)

(11) Numéro de publication : **0 048 657 B2**

(12) **NOUVEAU FASCICULE DE BREVET EUROPÉEN**

(45) Date de publication du nouveau fascicule du brevet : 05.04.89

(51) Int. Cl.⁴ : **H 02 H   3/093**, H 02 H   3/46

(21) Numéro de dépôt : **81401405.6**

(22) Date de dépôt : **10.09.81**

(54) **Dispositif de protection d'appareils électriques alimentés en courant alternatif.**

(30) Priorité : **19.09.80 FR 8020294**

(43) Date de publication de la demande :
**31.03.82 Bulletin 82/13**

(45) Mention de la délivrance du brevet :
**10.04.85 Bulletin 85/15**

(45) Mention de la décision concernant l'opposition :
**05.04.89 Bulletin 89/14**

(84) Etats contractants désignés :
**BE CH DE GB IT LI NL SE**

(56) Documents cités :
**DE–B– 2 155 470**
**FR–A– 2 344 159**
**US–A– 3 529 215**
**US–A– 3 993 984**
**Westinghouse Descriptive Bulletin 41-504, s. 1-4, May 1973**
**"Microcomputer Frequency Relay", Robert J. Sullivan, Westinghouse Electric Corporation, presented to Western Protective Relay Conference, October 16-18, 1979, Spokane, Washington**

(73) Titulaire : **MERLIN GERIN**
**Rue Henri Tarze**
**F-38050 Grenoble Cedex (FR)**

(72) Inventeur : **Alemany, Claude**
**Merlin Gerin**
**F-38050 Grenoble Cedex (FR)**

(74) Mandataire : **Kern, Paul et al**
**Merlin Gerin Sce. Brevets 20, rue Henri Tarze**
**F-38050 Grenoble Cedex (FR)**

Jouve, 18, rue St-Denis, 75001 Paris, France

## Description

L'invention est relative à un dispositif de protection selon le préambule de la revendication 1.

Les circuits d'alimentation ou de distribution électrique comportent des dispositifs de protection signalant ou isolant automatiquement, par exemple par déclenchement d'un disjoncteur, les parties en surcharge ou en défaut afin d'éviter une extension du défaut à l'ensemble du circuit. Les disjoncteurs de protection sont généralement équipés d'un déclencheur thermique et électromagnétique incorporé à l'appareil, mais les performances de ces déclencheurs sont limitées. Les déclencheurs statiques proposés récemment pour des disjoncteurs de fort calibre sont compliqués et coûteux. La protection peut également être assurée par des relais de surveillance qui pilotent des dispositifs de commande pour pallier le défaut, mais ces systèmes font appel à un grand nombre de composants et de liaisons dont la fiabilité n'est pas absolue.

Le document « Microcomputer Frequency Relay » de Robert J. Sullivan présenté à la « Western Protective Relay Conference » 16-18 octobre 1979 Spokane, Washington, décrit un relais de fréquence ayant un microprocesseur qui détermine la fréquence du signal par comptage du nombre d'impulsions d'une horloge, intervenant entre deux interruptions successives provoquées à chaque passage au zéro du signal. Par comparaison à une valeur mémorisée, le microprocesseur détecte une baisse de fréquence et déclenche une opération de protection. Un détecteur analogique détecte une baisse de tension.

La présente invention a pour but de permettre la réalisation d'un dispositif électronique simple et performant à microprocesseur pouvant être associé directement à un disjoncteur ou à tout autre appareil de protection d'une installation électrique.

Ce but est réalisé par la mise en œuvre des particularités de la revendication 1.

Le dispositif selon l'invention fait usage d'un microprocesseur dont les performances sont bien connues des spécialistes, associé à un compteur piloté par les passages à zéro du signal représentatif du courant alternatif. Cet ensemble de base peut être agencé pour surveiller la fréquence du signal alternatif en mesurant le temps écoulé entre deux passages à zéro successifs par simple soustraction des contenus du compteur aux instants de ces deux passages à zéro. Le microprocesseur génère le signal de protection qui peut être un signal indicateur ou un signal de commande automatique par exemple d'actionnement d'un appareil de protection.

Le dispositif peut gérer plusieurs voies, chacune par exemple affectée à l'une des phases du circuit, ou l'une étant affectée à l'intensité et l'autre à la tension d'un courant, en utilisant une interface de transfert des signaux à plusieurs entrées. Un détecteur, par exemple un transformateur de courant, fournit un signal alternatif de même fréquence et d'amplitude instantanée proportionnelle à l'amplitude du courant parcourant le conducteur de phase associé. Les signaux alternatifs sont mis en forme sous la forme de signaux carrés. Ces derniers agissent sur une interface gérée par le microprocesseur. Chaque front (ou un front sur deux) du signal carré provoque une interruption du microprocesseur. Celui-ci se déroute de son programme principal et traite cette interruption. Ce traitement consiste à lire en interrogeant l'interface quelle est la voie qui a provoqué l'interruption, c'est-à-dire la voie dont le signal vient de passer à zéro. Le microprocesseur lit alors le contenu du compteur. On conçoit qu'ainsi on puisse non seulement mesurer la fréquence du signal en mesurant le temps écoulé entre les passages à zéro par lecture du compteur et soustraction des valeurs du compteur lues entre les temps $t_0$ et $t_0 + T$, T étant la période du signal, mais encore mesurer le déphasage entre deux signaux de même fréquence. Ce dispositif peut être appliqué à un relais d'enclenchement de batteries de condensateurs pour le réglage du cos $\varphi$, à des relais de mesure de puissance active ou réactive et/ou à des relais directionnels.

Selon un développement ou l'un des modes de mise en œuvre de l'invention, le dispositif est agencé pour une détection de l'amplitude maximale pour assurer un déclenchement automatique d'un disjoncteur lorsque cette amplitude maximale dépasse un seuil prédéterminé. On sait que dans un signal sinusoïdal la crête du signal est présente à l'instant T/4 après le passage à zéro du signal. La fréquence et de ce fait la période T du signal étant connues, par exemple 50 Hz dans le cas d'un réseau alternatif, ou mesurées de la manière susmentionnée, on utilise un compteur décrémenté à chaque coup de la base de temps. Au passage à zéro, le compteur est chargé à l'aide du microprocesseur avec une valeur binaire telle que ce compteur arrive à zéro à l'instant T/4 plus tard. Lorsque le compteur arrive à zéro, il provoque une interruption du microprocesseur. Celui-ci lit alors la valeur instantanée du signal en utilisant un convertisseur analogique-numérique. On possède ainsi la valeur du signal alternatif T/4 après son passage à zéro. Si ce signal a été correctement filtré, celui-ci peut être considéré comme sinusoïdal. On a alors mesuré la valeur crête du signal et la valeur efficace du signal s'en déduit.

Le dispositif peut être appliqué aux relais de surcharge, à maximum de courant, à minimum de courant, de puissance etc., et de manière générale à tout relais où la mesure de l'amplitude du signal est nécessaire.

Le filtrage du signal peut être effectué en amont de l'interface et du convertisseur analogique numérique et dans ce cas la valeur maximale du signal émis par le convertisseur analogique numérique intervient bien à l'instant T/4 après le passage à zéro du signal. Si le circuit de transmission du signal au convertisseur analogique numérique comprend un composant, par exemple un filtre introduisant un déphasage du signal, ce composant étant absent dans le circuit vers l'interface il convient bien entendu de tenir compte de ce déphasage et effectuer la mesure de la valeur instantanée à l'instant T/4 + retard apporté par le filtre.

D'autres avantages et caractéristiques de l'invention ressortiront plus clairement de la description qui va suivre d'un mode de mise en œuvre de l'invention, donné à titre d'exemple non limitatif et représenté aux dessins annexés, dans lesquels :

la figure 1 est un schéma synoptique du dispositif selon l'invention ;

les figures 2 et 3 montrent des courbes de signaux alternatifs appliqués au dispositif selon la figure 1 ;

la figure 4 est une vue partielle de la figure 1, illustrant une variante de réalisation.

Sur les figures, un circuit triphasé 10, par exemple le réseau, est protégé par un disjoncteur 12 ayant un dispositif de commande de déclenchement 14 en cas de surcharge ou de défaut pour interrompre l'alimentation de la charge. A chaque conducteur du circuit 10 est associé un transformateur de courant 16, 18, 20 qui délivre un signal alternatif représentatif du courant parcourant le conducteur correspondant. Chaque signal alternatif est filtré dans un filtre passe bas 22, 24, 26 ne retenant que l'harmonique 1 et mis en forme dans un bloc 28, 30, 32, de manière à obtenir des créneaux carrés dont les changements d'état s'effectuent aux passages à zéro du signal. Les signaux carrés transitent par une interface 34 à un microprocesseur 36 pour demander une interruption 38 au microprocesseur 36 à chaque passage à zéro de l'un des signaux. Le programme de traitement de cette interruption provoque une interrogation 40 de l'interface 34 pour savoir quelle est la voie analogique qui a demandé l'interruption, c'est-à-dire quel est le signal qui vient de passer à zéro. Le microprocesseur 36 gère deux compteurs 42, 44 programmables, tous deux pilotés par une base de temps 46 de fréquence nettement supérieure à celle du circuit triphasé 10. Le contenu des compteurs 42, 44 est décrémenté à chaque coup de la base de temps 46. Les compteurs 42, 44 sont reliés en 50, 52 à un bus de données 48 du microprocesseur et peuvent demander par les liaisons 54, 56 une interruption du microprocesseur 36. Le bus de données 48 est relié à la commande de déclenchement 14.

Avant de compléter la description du dispositif selon la figure, il semble opportun de décrire le fonctionnement de l'ensemble susmentionné :

A chaque passage à zéro de l'un des signaux alternatifs délivrés par les transformateurs 16, 18, 20, l'interface 34 provoque une interruption du microprocesseur 36, lequel interroge l'interface 34 et enregistre la voie ayant demandé l'interruption. Le microprocesseur lit la valeur du compteur 42. Au prochain passage à zéro transmis par la même voie, le microprocesseur lit à nouveau la valeur du compteur 42 et effectue la soustraction des deux valeurs qui est une mesure du temps écoulé entre les deux passages successifs à zéro du signal permettant de calculer la fréquence du signal. Le dispositif permet une mesure des fréquences des différentes phases, mais il est clair que dans certaines applications le dispositif peut être simplifié et ne mesurer la fréquence que d'un seul signal.

Le dispositif décrit peut constituer un relais de fréquence à minimum ou à maximum ou un relais de délestage fréquence-métrique.

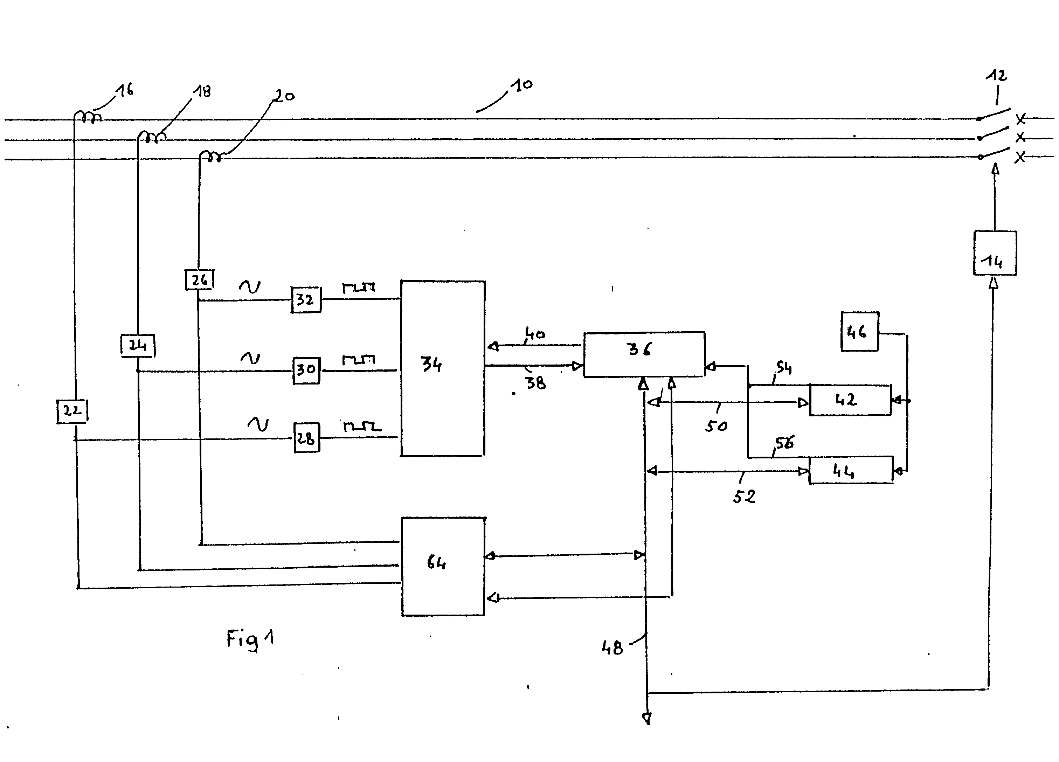

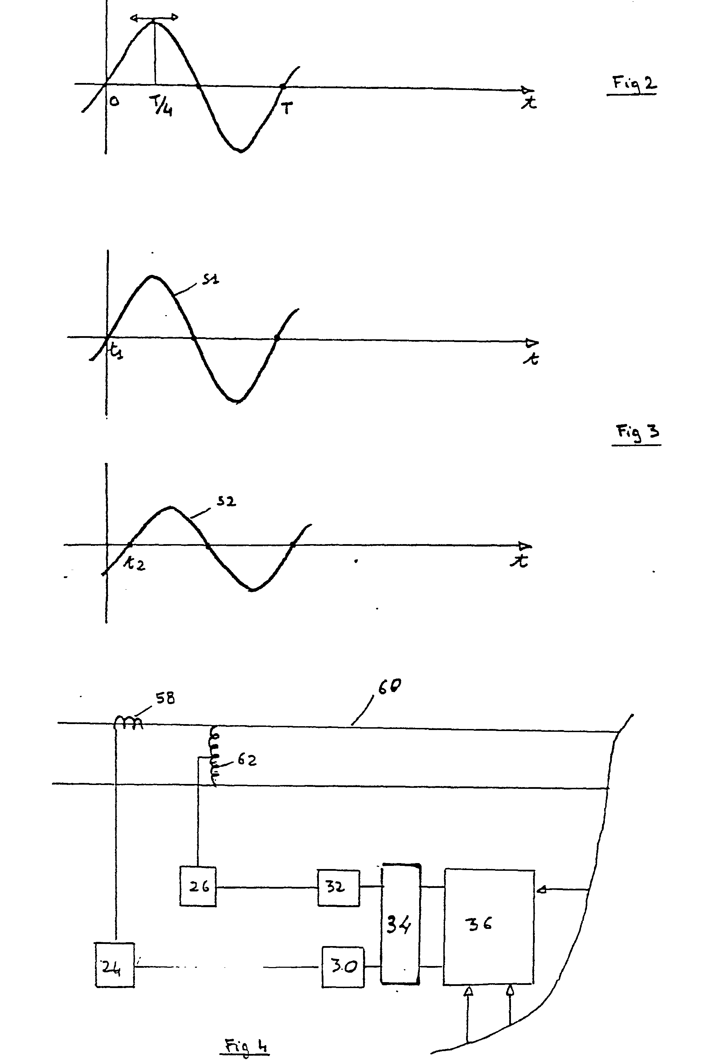

Le microprocesseur 36 peut être programmé pour lire le contenu du compteur 42 au passage à zéro de chacun des signaux alternatifs et pour soustraire la valeur lue du compteur au passage à zéro $t_1$ (fig. 3) de l'un des signaux $S_1$ à la valeur lue du compteur au passage à zéro $t_2$ d'un autre desdits signaux $s_2$ pour déterminer le déphasage entre les deux signaux $s_1$ et $s_2$. Dans l'exemple illustré par la figure 1, le microprocesseur 36 mesurera le déphasage entre les courants dans les différents conducteurs du circuit 10, mais on comprend que le déphasage mesuré peut correspondre à des valeurs différentes d'un même courant, par exemple la tension et l'intensité. La figure 4 illustre schématiquement une telle variante dans laquelle l'un des signaux est fourni par un transformateur de courant 58 et représente l'intensité du courant dans un circuit 60 et l'autre des signaux est fourni par un transformateur de potentiel 62 et représente la tension dans le circuit 60. Le microprocesseur 36 mesure le déphasage entre les deux signaux de la manière décrite ci-dessus. En se reportant à nouveau à la figure 1, on voit que les sorties des filtres 22, 24, 26 sont reliées à un convertisseur analogique numérique 64 qui fournit une valeur binaire représentative de l'amplitude du signal. Le convertisseur analogique numérique 64 permet une mesure de l'amplitude crête d'un signal. En se référant à la figure 2, on voit que l'amplitude crête d'un signal sinusoïdal est présente à l'instant T/4 après le passage à zéro du signal, T étant la période du signal.

Le dispositif selon l'invention détermine cette valeur crête de la manière suivante :

La période T peut être déterminée par la mesure de la fréquence f = 1/T de la manière décrite ci-dessus. Si le circuit 10 est le réseau la période T est connue et sa mesure peut être superflue.

Au passage à zéro du signal l'interruption du microprocesseur 36 demandée par l'interface 34 provoque une charge du compteur 44 avec une valeur binaire de T/4, telle que le compteur 44 arrive à zéro par décrémentation à chaque coup de la base de temps 46, à l'instant T/4. Lorsque le compteur 44 arrive à zéro il provoque une interruption du microprocesseur 36 qui lit la valeur instantanée du signal correspondant dans le convertisseur analogique numérique 64. Si le signal a été correctement filtré cette valeur correspond à la valeur crête et une comparaison à une valeur seuil prédéterminée permet la détection d'une surcharge ou d'un défaut et la commande de déclenchement du disjoncteur 12.

On peut noter que le dispositif illustré par la figure 1 peut être simplifié lorsque seule l'amplitude crête du signal doit être mesurée. Inversement, le microprocesseur peut être agencé pour effectuer d'autres opérations, notamment de comptage sans sortir du cadre de l'invention, et il peut commander toute autre opération, notamment de signalisation ou de fermeture d'un appareil.

Le dispositif est suffisamment simple et compact pour une incorporation à des appareils de protection tels que des disjoncteurs basse tension ou moyenne tension.

L'intérêt du dispositif inventif est de peu solliciter le microprocesseur pour l'acquisition de la fréquence, des déphasages des amplitudes des voies alternatives, ces acquisitions intervenant pendant des interruptions. Le microprocesseur est ainsi disponible pour effectuer des programmes de traitement de ces données et/ou effectuer d'autres programmes.

**Revendications**

1. Dispositif de protection pour un circuit d'alimentation (10) en courant alternatif comprenant un détecteur (16, 18, 20 ; 58, 62) associé au circuit d'alimentation (10) pour émettre un signal alternatif représentatif du courant parcourant le circuit d'alimentation (10), une interface (34) de transfert dudit signal alternatif à un microprocesseur (36) pour provoquer une interruption du microprocesseur (36) au passage à zéro du signal, une base de temps (46), de fréquence notablement supérieure à celle du signal alternatif, pilotant le microprocesseur (36) et au moins un compteur programmable (42, 44) dont le contenu est décrémenté à chaque coup de la base de temps (46), le microprocesseur (36) générant une action de protection, caractérisé en ce qu'il comporte de plus un convertisseur analogique numérique (64) convertissant ledit signal alternatif appliqué à l'entrée en un signal numérique représentatif de l'amplitude instantanée du signal alternatif, ledit signal numérique étant appliqué à l'entrée du microprocesseur (36) et qu'un premier compteur (44) est chargé par le microprocesseur au passage à zéro du signal alternatif avec une valeur binaire, de façon que le premier compteur (44) arrive à zéro après le temps T/4, T étant la période du signal alternatif, et provoque alors une interruption du microprocesseur et une lecture par celui-ci du convertisseur analogique numérique pour déterminer l'amplitude maximale du signal alternatif.

2. Dispositif selon la revendication 1, caractérisé en ce qu'il comporte un second compteur (42), décrémenté à chaque coup de base de temps, le contenu du second compteur (42) étant lu par le microprocesseur (36) à chaque passage à zéro du signal alternatif pour déterminer la fréquence et/ou le déphasage du signal alternatif.

3. Dispositif de protection selon la revendication 1 ou 2, caractérisé en ce qu'il comporte un filtre passe-bas (22, 24, 26) et/ou de mise en forme du signal alternatif disposé avant ladite interface (34).

**Claims**

1. Protection device for an alternating current supply circuit (10) comprising a detector (16, 18, 20, 58, 62) associated to the supply circuit (10) for generating an alternating signal which represents the current flowing in the supply circuit (10), an interface (34) to transfer said alternating signal to a microprocessor (36) for an interruption of the microprocessor (36) at the zero crossing of the signal, a time reference device (46) of a frequency substantially higher than the alternating signal frequency, which controls the microprocessor (36) and at least a programmable counter (42, 44), the number of pulses in the counter being decremented at each time reference (46) pulse, the microprocessor (36) producing a protection operation, characterized in that it comprises also an analog-to-digital converter (64) for converting said input alternating signal in a digital signal representing the instantaneous alternating signal value, said digital signal being applied to the microprocessor (36) input and that a first counter (44) is set by the microprocessor at the alternating signal zero crossing at a digital value so that the first counter (44) is at zero after the time T/4, T being the period of the alternating signal, and provokes than an interruption of the microprocessor and a reading by the last of the analog-to-digital converter (64) to determine the maximum value of the alternating signal.

2. Protection device according to claim 1, characterized in that it comprises a second counter (42), decremented at each time reference pulse, the count of the second counter (42) being read by the microprocessor (36) at each zero crossing of the alternating signal to determine the frequency and/or the phase difference of the alternating signal.

3. Protection device according to claim 1 or 2, characterized in that it comprises a low band pass filter (22, 24, 26) and/or shaper of the alternating signal disposed before said interface (34).

**Patentansprüche**

1. Schutzvorrichtung für einen Wechselstrom-Schaltkreis (10) mit einem Detektor (16, 18, 20, 58, 62), der mit dem Schaltkreis (10) verbunden ist, um ein alternatives Signal abzugeben, das den im Schaltkreis (10) fliessenden Strom darstellt, mit einer Zwischenfläche (34) zur Übertragung des genannten alternativen Signals auf einen Mikroprozessor (36), um eine Unterbrechung des Mikroprozessors (36) beim Nulldurchgang des Signals hervorzurufen, mit einer den Mikroprozessor (36) steuernden Zeitbasis (46) von bedeutend höherer Frequenz als die des alternativen Signals, und mit wenigstens einem programmierbaren Zähler (42, 44), dessen Inhalt bei jedem Impuls der Zeitbasis (46) dekrementiert wird, wobei der Mikroprozessor (36) eine Schutztätigkeit bewirkt, dadurch gekennzeichnet, dass sie ausserdem einen Analog-Digital-Konverter (64) aufweist, der das genannte am Eingang angelegte alternative Signal in ein digitales Signal umsetzt, welches den Momentanwert des alternativen Signals darstellt und am Eingang des Mikroprozessors (36) angelegt wird, und dass ein erster Zähler (44) beim Nulldurchgang des alternativen Signals von dem Mikroprozessor mit einem binären Wert belastet wird, so dass der erste Zähler (44) nach dem Zeitpunkt T/4 bei Null ankommt, wobei T die Periode des alternativen Signals ist, und dass er dann eine Unterbrechung des Mikroprozessors und ein Lesen des Analog-Digital-Konverters (64) bewirkt, um den maximalen Wert des alternativen Signals zu bestimmen.

2. Schutzvorrichtung gemäss Anspruch 1, dadurch gekennzeichnet, dass sie einen zweiten Zähler (42) aufweist, der bei jedem Zeitbasis-Impuls dekrementiert wird, wobei der Inhalt des zweiten Zählers (42) bei jedem Nulldurchgang des alternativen Signals von dem Mikroprozessor (36) gelesen wird, um die Frequenz und oder die Phasendifferenz des alternativen Signals zu bestimmen.

3. Schutzvorrichtung gemäss Anspruch 1 oder 2, dadurch gekennzeichnet, dass sie einen Tiefpassfilter (22, 24, 26) und/oder einen Formgeber des alternativen Signals aufweist, der vor der genannten Zwischenfläche (34) angeordnet ist.

Fig 1

Fig 2

Fig 3

Fig 4

2